# EUROPÄISCHE PATENTANMELDUNG

(11) **EP 0 919 141 A1**
(43) Veröffentlichungstag der Anmeldung: **02.06.1999**
(21) Anmeldenummer: 97810934.6
(22) Anmeldetag: 01.12.1997
(51) Int. Cl.: A23N 12/08, F26B 17/08

(54) **Vorrichtung zum Entwässern von gewaschenen Produkten, insbesondere Agrarprodukten**

(71) Anmelder: Kundert Ingenieure AG, 8952 Schlieren (CH)
(72) Erfinder: Ledermann, Ernst, CH-8934 Knonau (CH); Hofer, Jürg, CH- 8907 Wettswil (CH)
(74) Vertreter: Münch, Otto, Dipl.-Ing.

(57) **Zusammenfassung**

Die Vorrichtung hat mehrere in Serie geschaltete Förderelemente (20) mit zwei parallelen Zahnriemen und damit verbundenen Tragblechen. Die Riemen sind jeweils über Umlenkräder (15) geführt, wo die Förderelemente (20) um etwa 180° abgelenkt werden. Die zu entwässernden Produkte gelangen im Durchlaufverfahren der Reihe nach auf die Förderelemente (20), wobei das an den Produkten haftende Wasser bei den Umlenkrädern (15) abgeschleudert wird. Mit der Vorrichtung wird eine schonende Entwässerung im Durchlaufverfahren erreicht.

## Beschreibung

Es ist bekannt, gewaschene Produkte, z.B. Salat, in Zentrifugen zu entwässern. Dabei wird der grösste Teil des noch am Salat haftenden Waschwassers abgeschleudert. Dieser Vorgang kann nicht kontinuierlich erfolgen. Zudem werden bei den gegenwärtigen Zentrifugen zwecks Erreichens des gewünschten Entwässerungsgrades derart hohe Drehzahlen (Radialbeschleunigungen) eingesetzt, dass insbesondere empfindliche Produkte, wie Salate, beschädigt werden können, dabei optische Einbussen erfahren und nur noch beschränkt haltbar sind.

Der vorliegenden Erfindung liegt die Aufgabe zugrunde, eine Vorrichtung anzugeben, mit welcher gewaschene Produkte schonend und im Durchlaufverfahren entwässert werden können. Diese Aufgabe wird durch die Merkmalskombination der Ansprüche gelöst.

Nachfolgend wird ein Ausführungsbeispiel der Erfindung anhand der Zeichnungen erläutert. Darin zeigt:

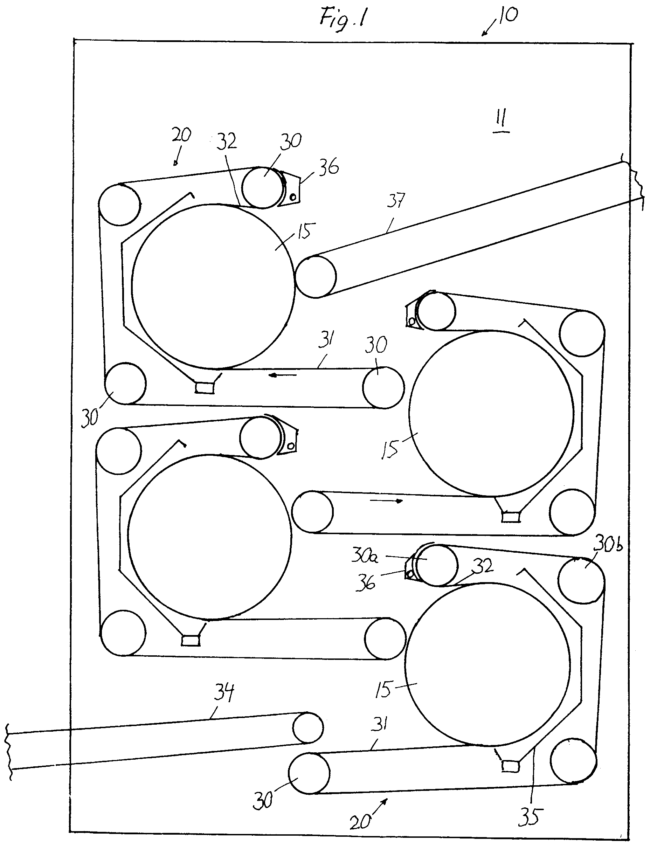

- Figur 1: eine schematische Seitenansicht,

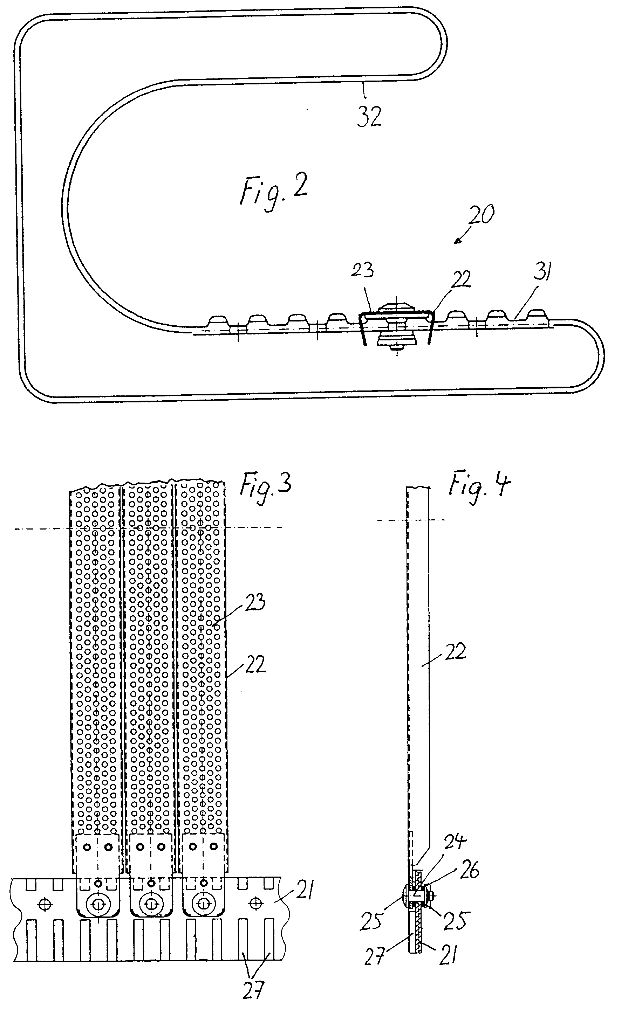

- Figur 2: eine Seitenansicht eines Förderelementes,

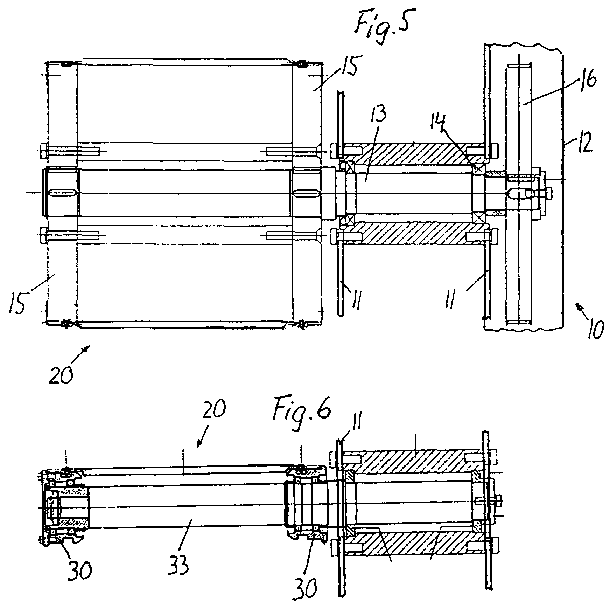

- Figuren 3 und 4: eine Draufsicht und einen Querschnitt durch ein Förderelement,
- Figur 5: einen Querschnitt durch ein Umlenkrad, und
- Figur 6: einen Querschnitt durch eine Umlenkrolle.

Die dargestellte Vorrichtung umfasst ein Gehäuse 10 bestehend aus zwei parallelen, vertikalen Tragplatten 11 und einer Rückwand 12. Im Gehäuse 10 sind vier Antriebswellen 13 auf Wälzlagern 14 drehbar gelagert. Auf jeder Welle 13 sind axial beabstandet zwei Umlenkräder 15 befestigt. Auf der Rückseite des Gehäuses 10 ist auf jeder Welle 13 ein Zahnriemenrad 16 befestigt. Die vier Räder 16 sind durch einen gemeinsamen, nicht dargestellten Antriebsmotor über einen Zahnriemen angetrieben. Die Räder 16 der vier Wellen 13 können unterschiedliche Zähnezahlen haben, um die Drehzahl der Räder 15 abzustufen. Zum Beispiel kann das unterste Rad 16 einen um etwa 20 % grösseren Durchmesser aufweisen als die beiden nachfolgenden Räder 16.

Um je ein Paar der Räder 15 erstreckt sich über etwa den halben Umfang ein Förderelement 20 bestehend aus zwei parallelen Zahnriemen 21 und an diesen befestigten, sich quer zu den Riemen 21 erstreckenden, C-förmig abgekröpften Blechen 22 aus nicht rostendem Stahl. Der Steg 23 der Bleche 22 ist eben und perforiert. Die Bleche 22 schliessen mit geringem Abstand aneinander an. Die Stege 23 sind an beiden gegenüberliegenden Seiten durch je einen Bolzen und Scheiben 25 mit zwischengelegten Gummiringen 26 an den Riemen 21 befestigt. Die Riemen 21 haben nur auf einem Teil ihrer Breite Zähne 27, und zwar auf der Seite der Stege 23. Sie sind durch Stahlseile oder Drähte oder Stahlseelen verstärkt. Damit sind sie praktisch nicht dehnbar und haben eine lange Lebensdauer. Die Förderelemente 20 sind ausserdem über je vier Paare von Umlenkrollen 30 so geführt, dass jeweils ein annähernd horizontales, unteres, längeres Einlauftrum 31 und ein kurzes, annähernd horizontales Auslauftrum 32 gebildet ist. Die Rollen 30 sind auf gehäusefesten, horizontalen Zapfen 33 fliegend drehbar gelagert.

Das Einlauftrum 31 des untersten Förderelementes 20 wird durch ein Förderband 34 mit gewaschenen Agrarprodukten, z.B. Gemüse oder Salat oder zu Scheiben zerschnitten, rohen Kartoffeln für die Produktion von Pommes Chips beschickt. Beim Durchlauf des Förderelements 20 über die Räder 15 wird das Wasser von den Produkten teilweise abgeschleudert und in einer die Rückseite des Förderelementes 20 bei den Rädern 15 umgebenden Auffangwanne 35 aufgefangen und abgeführt. Die Wanne 35 ist unten, seitlich entwässert. Bei den Umlenkrollen 30a am Ende des Trums 32 ist ein Auffangkörper 36 angeordnet. Hier wird das auf der Innenseite der Bleche 22 noch anhaftende Wasser abgeschleudert, wobei die Zentrifugalkräfte wegen des geringen Durchmessers der Rollen 30a wesentlich grösser sind. Das Wasser wird durch den Auffangkörper 36 aufgenommen und durch den mittels der Stege 23 erzeugten Luftstrom am oberen Teil des Auffangkörpers 36 wieder auf das Förderelement 20 aufgetragen. Bei der Umlenkrolle 30b wird dieses Wasser nun endgültig an die Maschinenschalung abgeschleudert.

Der Auffangkörper 36 ist als Hohlkörper ausgebildet und mit einer gegen die Umlenkrolle 30a gerichteten Spaltdüse ausgestaltet. Mittels in einstellbaren Intervallen zugeführter Pressluft werden Produktteile, welche allenfalls zwischen Auffangkörper 36 und Umlenkrolle 30a anhaften, abtransportiert.

Vom Auslauftrum 32 werden die Produkte auf das Einlauftrum 31 des nächstfolgenden Förderelements 20 geschleudert, wo sich der Entwässerungsvorgang in gleicher Weise wiederholt. Vom Auslauftrum 32 des obersten Förderelementes 20 werden die entwässerten Produkte auf ein weiteres Förderband 37 geschleudert. Das Band 37 fördert die Produkte zu einer weiteren Bearbeitungsstation, z.B. zu einem Durchlauftrockner oder direkt zu einer Verpackungsmaschine oder bei der Herstellung von Pommes Chips zu einer Friteuse.

Weil die Produkte nacheinander bei mehreren Umlenkrädern 15 entwässert werden und dabei zwischen aufeinanderfolgenden Rädern 15 umgeschichtet werden, wird eine effiziente, beidseitige Entwäs-serung auch bei relativ geringen Radialbeschleunigungen von etwa 20 bis 25 g erreicht. Demgegenüber werden herkömmliche Zentrifugen bei etwa 60 g Radialbeschleunigung betrieben. Durch die wesentlich geringeren Beschleunigungen bei der erfindungsgemässen Vorrichtung werden die Produkte schonend behandelt. Dadurch steigt bei empfindlichen Produkten die Haltbarkeit.

Mit der beschriebenen Vorrichtung wird z.B. ein Entwässerungsgrad von 4 bis 10 % Restwasser erreicht. In einem nachfolgenden Durchlauftrockner wird der Trocknungsgrad auf etwa 2 % Restwasser erhöht. Auch damit kann die Haltbarkeit gesteigert werden. Die Entwässerung erfolgt im kontinuierlichen Durchlaufverfahren. Dadurch kann das heute übliche batchweise Beschicken und Entladen von Zentrifugen vermieden werden. Damit wird der Arbeitsaufwand für das Bedienungspersonal erheblich gesenkt. Durch die fliegende Lagerung der Umlenkräder 15 und -rollen 30 sind die Wartung, Reinigung und die Bedienung erheblich erleichtert.

Statt der Riemen 21 können auch andere endlose, biegsame Zugelemente verwendet werden, z.B. Ketten oder Stahlseile. Bei der Verwendung von Ketten können die Bleche 22 z.B. beidseitig an je zwei benachbarten Gelenkbolzen der Kette aufgesteckt oder an je einem Kettenglied befestigt sein. Die Räder 15 sind in diesem Fall Kettenräder. Bei der Verwendung von Stahlseilen haben die Bleche 22 z.B. beidseitig je zwei seitlich abstehende Stifte mit Schlitzen, die auf die Seile seitlich aufgesteckt und anschliessend festgeklemmt werden. Die Räder 15 haben entsprechende Ausnehmungen für die Stifte. Dadurch kann ein genauer Synchronlauf der beiden parallelen Seile erreicht werden.

## Patentansprüche

1. Vorrichtung zum Entwässern von gewaschenen Produkten, insbesondere von Agrarprodukten, umfassend mehrere in Serie geschaltete, perforierte Tragmittel (22) enthaltende Förderelemente (20), welche je über Umlenkräder (15) über einen Winkel von weniger als 300° geführt sind, und wobei die Produkte jeweils am stromabwärtigen Ende des Umlenkrades (15) des einen Förderelementes (20) auf das nächste Förderelement (20) bzw. auf ein Abtransportorgan (37) förderbar sind.

2. Vorrichtung nach Anspruch 1, wobei die Förderelemente (20) zwei parallele, endlose, biegsame Zugelemente (21) umfassen, an welchen die Tragmittel (22) befestigt sind.

3. Vorrichtung nach Anspruch 2, wobei die Tragmittel perforierte Bleche (22) sind, die an den Zugelementen (21) befestigt sind.

4. Vorrichtung nach Anspruch 3, wobei die Bleche (22) C-förmig abgekantet sind.

5. Vorrichtung nach einem der Ansprüche 2 bis 4, wobei die Tragmittel (22) elastisch nachgiebig an den Zugelementen (21) befestigt sind.

6. Vorrichtung nach einem der Ansprüche 2 bis 5, wobei die Zugelemente (21) Zahnriemen sind, und wobei vorzugsweise die Umlenkräder (15) motorisch antreibbar sind.

7. Vorrichtung nach einem der Ansprüche 1 bis 6, wobei sämtliche Förderelemente (20) fliegend gelagert sind, so dass sie von der einen Seite gut zugänglich sind.

8. Vorrichtung nach Anspruch 7, wobei die Förderelemente (20) zusätzlich um Umlenkräder (30) geführt sind, die auf gehäusefesten Zapfen (33) drehbar gelagert sind.

9. Vorrichtung nach einem der Ansprüche 1 bis 8, wobei die Umlenkräder (15) über eine Kette oder einen Zahnriemen und mit den betreffenden Umlenkrädern (15) starr verbundenen Ketten- bzw. Riemenräder (16) durch einen gemeinsamen Motor angetrieben sind, und wobei vorzugsweise das in Durchlaufrichtung erste Ketten- bzw. Riemenrad (16) einen grösseren Durchmesser hat als die übrigen Ketten- bzw. Riemenräder (16).
